# EUROPÄISCHE PATENTSCHRIFT

(11) **EP 1 682 882 B1**
(45) Veröffentlichungstag und Bekanntmachung des Hinweises auf die Patenterteilung: **09.12.2009**
(21) Anmeldenummer: 04790955.1
(22) Anmeldetag: 28.10.2004
(51) Int. Cl.: G01N 27/414

(54) **SENSORANORDNUNG MIT MEHREREN POTENTIOMETRISCHEN SENSOREN**
SENSOR ARRANGEMENT PROVIDED WITH SEVERAL POTENTIOMETRIC SENSORS
ENSEMBLE DE DETECTION COMPORTANT PLUSIEURS CAPTEURS POTENTIOMETRIQUES

(30) Priorität: 11.11.2003 DE 10352917
(43) Veröffentlichungstag der Anmeldung: 26.07.2006
(73) Patentinhaber: Endress + Hauser Conducta Gesellschaft für Mess- und Regeltechnik mbH + Co.KG., 70839 Gerlingen (DE)
(72) Erfinder: BABEL, Wolfgang, 71263 Weil der Stadt (DE); PECHSTEIN, Torsten, 01445 Radebeul (DE); STECKENREITER, Thomas, 60388 Frankfurt (DE)
(74) Vertreter: Andres, Angelika Maria
(86) Internationale Anmeldenummer: PCT/EP2004/012182
(87) Internationale Veröffentlichungsnummer: WO 2005/047878

(56) Entgegenhaltungen:
- WO-A1-03/052097
- DE-A1- 19 857 953
- US-A- 4 874 499
- US-A- 5 478 526
- US-A1- 2002 125 133
- PATENT ABSTRACTS OF JAPAN Bd. 008, Nr. 157 (P-288), 20. Juli 1984 (1984-07-20) & JP 59 052745 A (FUJITSU KK), 27. März 1984 (1984-03-27)

## Beschreibung

Die vorliegende Erfindung betrifft eine Sensoranordnung zur potentiometrischen Untersuchung einer Vielzahl von Proben, insbesondere mit sogenannten ISFET oder CHEMFET-Sensoren. Potentiometrische FET-Sensoren der genannten Art sind zur Messung des PH-Werts oder des Red-Ox-Potentials eines Analyten geeignet. Das Patent DE 198 57 953 C2 betrifft beispielsweise die Realisierung eines pH-ISFET-Sensor, bei dem zur Reduzierung des Schaltungsaufwands der ISFET-Sensor als Widerstand in eine Brückenschaltung mit mindestens drei weiteren Widerständen angeordnet ist. Hinsichtlich der Montage eines FET-Sensors sind u. a. die folgenden Prinzipien bekannt. Benton offenbart in US-Patent- Nr. 5,833,824 einen pH-Sensor, bei dem ein ISFET-Chip mittels einer metallischen Dichtung, welche den ionensensitiven Bereich des ISFET-Chips umgibt an der Unterseite eines Substrats befestigt ist, wobei der ionensensitive Bereich mit einer Öffnung in dem Substrat fluchtet. Außerhalb des von der Dichtung umgebenen Bereiches werden Leiterbahnen an der Oberfläche des Chips zu Kontaktflächen geführt, welche über Löt- oder Schweißverbindungen mit komplementären Kontaktflächen an der Unterseite des Substrats verbunden sind. Die von Benton vorgeschlagene Lösung ist insofern sehr aufwendig, als sowohl bei der Herstellung der Dichtung als auch bei der Verwirklichung der elektrischen Kontaktierung aufwendige Löt- bzw. Schweißverfahren erforderlich sind. Der in Benton diskutierte Stand der Technik beschreibt ISFET-Sensoren, bei denen eine gewöhnliche polymerische Dichtung um die Öffnung der Probenkammerwand zwischen dem Substrat und dem ionensensitiven Bereich des ISFET-Chips angeordnet ist. Die Kontaktierung des ISFET-Chips erfolgt jedoch nicht zum Substrat im Sinne von Benton, sondern zu einem Träger, welcher den ISFET-Chip auf der von dem Substrat abgewandten Rückseite unterstützt. Zu diesem Zweck sind Bonddrähte zwischen Kontaktflächen an der Vorderseite des ISFET-Chips zu Kontaktflächen auf den Träger außerhalb der Auflagefläche des ISFET-Chips geführt. Auch diese Lösung ist aufwendig, weil Bondarbeiten zur Kontaktierung des Chips erforderlich sind, und weil zur Gewährleistung der Funktion und Integrität des Sensors der Chip sowohl bezüglich des Substrats wie auch bezüglich des Trägers in engen Toleranzen ausgerichtet sein muss. Weiterhin sind Lösungen bekannt, bei denen die Chips ihre Kontaktflächen bzw. Bondpads auf der dem ionensensitiv Bereich abgewandten Rückseite aufweisen. Diese Chips können dann rückseitig über einen Träger mit komplementären Kontaktflächen kontaktiert werden, wobei zur Gewährleistung ausreichender galvanischer Kontakte zwischen der Rückseite des Chips und dem Träger ein anisotroper elastischer Leiter, z.B. eine Silikonfolie mit eingebetteten Goldfäden in einer Richtung senkrecht zur Ebene der Folie angeordnet ist. Diese Lösungen sind insofern sehr teuer, da die Führung der elektrischen Anschlüsse durch den Chip von dessen Vorderseite zu dessen Rückseite seine Herstellungskosten um ein vielfaches erhöht.

Die Offenlegungsschrift WO-031052097 offenbart ein DNA Mikro-Array-System, wobei Nukleinsäuneproben an der Oberfläche des Gate-Isolators eines Feldeffekteffekttransistors immobilisiert werden, und anschließend eine Hybridisierung mit einem Ziel-Gen erfolgt, welcher eine messbare Veränderung der Ladungsdichte bewirkt.

US Patent Nr. 4,874,499 offenbart elektrochemische Mikrosensoren mit Fetdeffekt-Transistoren. Eine Messung unterschiedlicher Proben gegen eine gemeinsame Referenz ist nicht offenbart.

US Patent Nr. 5,478,526 offenbart eine automatische Analysevorrichtung für die chemische oder biochemische Analyse. Die Analysevorrichtung umfasst mehrere FET-Sensoren deren Empfindlichkeiten jeweils für den Nachweis eines anderen Analyten optimiert sind. Die FET-Sensoren werden gemeinsam mit einer Probe beaufschlagt.

Das Dokument JP5902745 offenbart eine Vorrichtung zum kontinuierlichen Messen der Aktivierungs Zeit von lymphatischen Zellen unter Verwendung von Feldeffekttransistoren, wobei die Zellen auf die Gate-Isolatoren einer Matrix von Feldeffekttransistoren aufgesetzt werden.

In der deutschen Patentanmeldung DE10260961 der Anmelderin der gegenwärtigen Anmeldung wird eine Sensoranordnung mit einem einzelnen ISFET- bzw. CHEMFET-Sensor mit einer frontseitigen Montage mittels eines anisotropen Leiters offenbart.

Die beschriebenen Sensoranordnungen sind jeweils nur die Untersuchungen einzelner Proben möglich. Es ist daher die Aufgabe der vorliegenden Erfindung, eine Sensoranordnung für potentiometrische Messungen bereitzustellen, die einerseits minimalen Probenvolumina messen und andererseits mehrere Proben gleichzeitig untersuchen kann.

Die Aufgabe wird erfindungsgemäß gelöst durch die Sensoranordnung gemäß des unabhängigen Patentanspruchs 1.

Die erfindungsgemäße Sensoranordnung umfaßt mindestens zwei Probenkammern; mindestens zwei potentiometrische FET-Sensoren, insbesondere IsFET-Sensoren oder ChemFET-sensoren mit einem sensitiven Oberflächenabschnitt, wobei der sensitive Oberflächenabschnitt jeweils mit einer der Probenkammern in Fließverbindung steht; eine Referenzzelle mit einem Referenzmedium zur Bereitstellung eines Referenzpotentials, wobei die Probenkammern mit dem Referenzmedium über eine Elektrolytbrücke verbunden sind.

Die Sensoranordnung ist gemäß einer Ausgestaltung der Erfindung modular aufgebaut, d. h. die Probenkammern sind in einem ersten Modul angeordnet und die potentiometrischen FET-Sensoren in einem zweiten Modul.

Das erste Modul kann beispielsweise einen plattenförmigen Grundkörper aufweisen, der Bohrungen aufweist, welche als Probenkammer dienen. Im Falle von durchgehenden Bohrungen können die potentiometrischen FET-Sensoren in ein zweites Modul integriert sein, welches die Bohrungen von der Unterseite des Grundkörpers als Bodenelement verschließt. Für jede Probenkammer kann ein separates Bodenelement vorgesehen sein, oder es können mehrere Probenkammern mit einem gemeinsamen Bodenelement verschlossen werden.

Die Elektrolytbrücke kann über Elektrolytkanäle erfolgen. In einem derzeit bevorzugten Ausführungsbeispiel weist der Grundkörper die Elektrolytkanäle auf. Der Grundkörper kann einstückig sein oder aus mehreren Elementen bzw. mehreren Schichten zusammengesetzt sein. Im letzteren Fall empfiehlt es sich, daß die Elektrolytkanäle in der Grenzfläche zwischen zwei Schichten angeordnet sind.

In einer weiteren Ausgestaltung sind die Elektrolytkanäle in das zweite Modul, insbesondere das Bodenelement, integriert.

Die Referenzzelle kann ebenfalls einen potentiometrischen FET-Sensor zur Bereitstellung eines Referenzpotentials aufweisen, wobei das Referenzpotential U_{diffref} gegen das Pseudoreferenzpotential einer Potentialableitelektrode gemessen werden kann. Die Potentialableitelektrode kommuniziert ebenfalls mit dem Referenzmedium in der Referenzzelle. Die Potentialableitelektrode kann beispielsweise einen metallischen Kontakt mit einer Silber- bzw. Silberchloridbeschichtung umfassen.

Die Potentiale U_{diff1}, U_{diff2}, .... U_{diffN} der N FET-Sensoren in den Probenkammern werden vorzugsweise gegen das Pseudoreferenzpotential gemessen. Die messgrößenrelevante Potentialdifferenz, beispielsweise Uₚₕ₁, wird durch Differenzbildung zwischen dem jeweiligen Potential und dem Referenzpotential ermittelt Uₚₕ₁ = U_{diff1} - U_{diffref}. Die Differenzbildung kann analog oder digital erfolgen.

Die FET-Sensoren, welche beispielsweise als vereinzelte Chips oder als eine Vielzahl von Sensorelementen in einem ggf. monolithischen Bodenelement vorliegen können, müssen zur Realisierung eines Sensors in der Weise angeordnet sein, daß sie einerseits mit den bisweilen korrosiven Proben beaufschlagt werden können, ohne daß andererseits korrosionsempfindliche Komponenten, z.B. Leiterbahnen, mit den Medien in Kontakt kommen. Hierzu werden in einer Ausgestaltung der Erfindung FET-Sensoren in der Weise angeordnet, daß die ionensensitiven Oberflächenbereiche der FET-Sensoren mit Bohrungen der Probenkammern fluchten, wobei zwischen dem Grundkörper und den FET-Sensoren eine ringförmige Dichtung angeordnet ist, welche die Bohrungen umgibt, so daß der ionensensitive Bereich des Halbleiterchips mit der Probe beaufschlagt werden kann, ohne das die Probe mit dem FET-Sensor außerhalb des von der Dichtung eingeschlossenen Bereichs in Berührung kommt. Für die elektrische Kontaktierung der FET-Sensoren sind verschiedene Ausgestaltungen möglich.

Derzeit wird das Konstruktionsprinzip der bereits in der Einleitung erwähnten deutschen Patentanmeldung DE10260961 bevorzugt. Demnach weisen die FET-Sensoren an der dem Grundkörper zugewandten Oberfläche erste Kontaktflächen auf, die mit passenden zweiten Kontaktflächen auf der dem FET-Sensor zugewandten Unterseite des Grundkörpers fluchten. Die Unterseite des Grundkörpers weist Leiterbahnen auf, über welche die zweiten Kontaktflächen mit geeigneten Schaltungen zur Speisung der FET-Sensoren elektrisch verbunden sind. Zwischen der Unterseite des Grundkörpers und der Oberfläche des FET-Sensors wird eine elastische Schicht bzw. Folie angeordnet, die senkrecht zur Oberfläche des FET-Sensors zumindest abschnittsweise anisotrop leitend ist, wobei die elastische Schicht eine Öffnung aufweist, die mit der Bohrung fluchtet. Die elastische Folie bzw. Schicht dient somit einerseits als Dichtung und andererseits zur elektrischen Kontaktierung.

Vorzugsweise umfaßt die elastische isolierende Schicht oder Folie in dem anisotrop leitfähigen Bereich eingebettete leitfähige Partikel, Körner oder Fäden, insbesondere metallische Partikel oder Fäden. Besonders bevorzugt sind derzeit Goldfäden, die sich senkrecht zur Ebene der elastischen organischen Schicht erstrecken. Besonders bevorzugt sind derzeit Silikonschichten, die Goldfäden aufweisen und kommerziell von der Firma Shin-Etsu erhältlich sind.

Sofern die elastische Schicht metallische Körner aufweist, so sind diese in einer relaxierten Schicht in einer solchen Konzentration gleich verteilt, daß es nicht zu einer außreichenden Zahl von elektrischen Kontakten zwischen den Körnern kommt, um eine elektrische Leitfähigkeit über große Distanzen herzustellen. Wird jedoch die elastische Schicht in einer Richtung komprimiert, beispielsweise durch Einspannung als Dichtelement, zwischen dem ersten Modul und dem zweiten Modul bzw. dem Grundkörper und dem Bodenelement, so entsteht in der Kompressionsrichtung eine ausreichende Zahl von elektrischen Kontakten, um die Leitfähigkeit entlang der Kompressionsrichtung zu gewährleisten. Unabhängig von der gewählten Art des Dichtelements können die FET-Sensoren bzw. das Bodenelement durch eine rückseitige Abstützung gegen die elastische Schicht gepresst werden, um die Dichtungswirkung der elastischen Schicht zu optimieren. Die rückseitige Abstützung kann sowohl steif als auch elastisch vorgespannt sein. Die elastische Vorspannung, z. B. mit einer Schraubfeder, ist insoweit vorteilhaft, als dadurch die Effekte von unterschiedlichen Wärmeausdehnungskoeffizienten sicherer ausgeglichen werden können, als wenn dies ausschließlich durch die Elastizität des Dichtungselements erfolgen müsste. Dies ist insbesondere dann beachtlich, wenn ein gewisser Kompressionsgrad des Dichtungselementes erforderlich ist, um die elektrische Leitfähigkeit durch die Dichtung zu gewährleisten.

Die anderen bekannten Kontaktierungsarten des FET-Sensors, beispielsweise gemäß Benton oder gemäß des in Benton diskutierten Stands der Technik sind ebenfalls zur Realisierung der vorliegenden Erfindung geeignet, wobei bei einer Kontaktierung gemäß Benton der Nachteil in Kauf zu nehmen ist, daß eine feste Verbindung zwischen dem FET-Sensor und dem Grundkörper erfolgt, wodurch die Modularität beeinträchtigt wird.

Die Erfindung wird nun anhand eines in den Figuren gezeigten Ausführungsbeispiels erläutert. Es zeigt:
- Fig. 1:: eine schematische Darstellung des Funktionsprinzipz einer Sensoranordnung gemäß der vorliegenden Erfindung;
- Fig. 2a:: eine Aufsicht auf die Unterseite eines Grundkörpers für eine Sensoranordnung gemäß der vorliegenden Erfindung
- Fig. 2b:: ein Dichtelement für eine Sensoranordnung gemäß der vorliegenden Erfindung; und
- Fig.2c:: einen Längsschnitt durch eine Sensoranordnung gemäß der vorliegenden Erfindung.

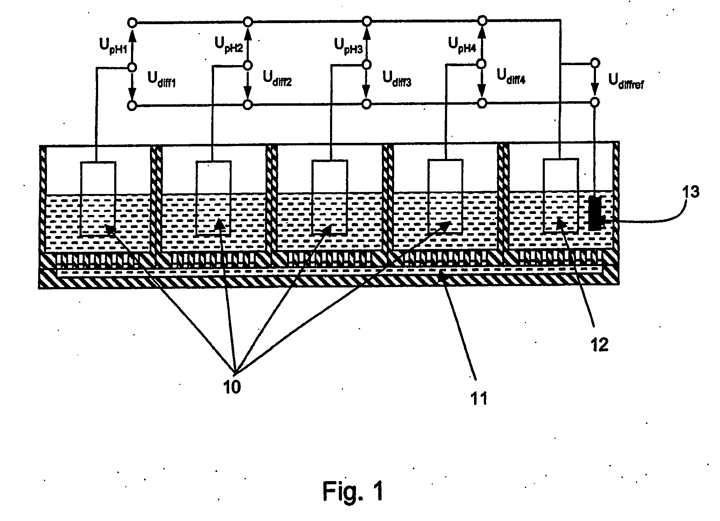

Fig. 1 zeigt schematisch das Funktionsprinzip der erfindungsgemäßen Sensoranordnung. Die FET-Sensoren 10 der Sensoranordnung weisen jeweils eine sensitive Gate-Region auf, welche mit einem Analyten in einer Probenkammer beaufschlagbar ist. Die einzelnen Probenkammern der Sensoranordnung sind über eine Elektrolytbrücke miteinander verbunden. Hierzu umfaßt die Elektrolytbrücke einen Elektrolytkanal 11 der über Diaphragmen mit den Probenkammern kommuniziert. Die Sensoranordnung umfaßt weiterhin eine Referenzkammer, in der eine Referenzelektrode 13, beispielsweise aus Platin, und ein Referenz-FET 12 angeordnet ist. Der Referenz-FET gibt ein Pseudoreferenzpotential U_{diffref} aus, gegen welches die Potentiale U_{diff1,} U_{diff2,} ... U_{diffN} der N FET-Sensoren in den Probenkammern gemessen werden. Die messgrößenrelevante Potentialdifferenz, beispielsweise Uₚₕ₁, wird durch Differenzbildung zwischen dem jeweiligen Potential und dem Referenzpotential ermittelt Uₚₕ₁ = U_{diff1} - U_{diffref}. Die Differenzbildung kann analog oder digital erfolgen.

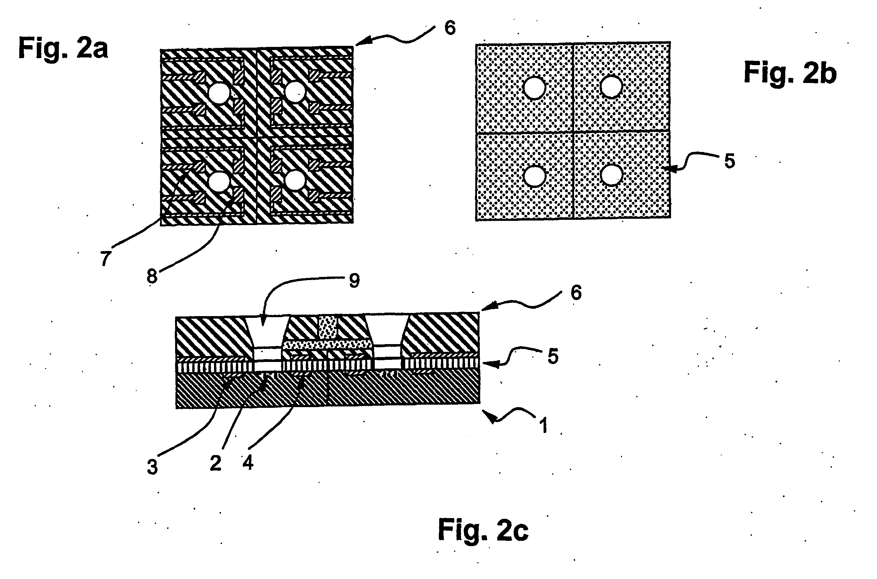

Konstruktive Einzelheiten eines Ausführungsbeispiels der erfindungsgemäßen Sensoranordnung werden nun anhand der Fign. 2a, 2b und 2c erläutert.

Fig. 2a zeigt die Unterseite eines Substrats 6 mit vier Probenkammern 9 für eine erfindungsgemäße Sensoranordnung. wobei auf der Unterseite jeweils Kontaktflächen 7 und 8 beabstandet zu den Öffnungen der Probenkammern angeordnet sind. Die Kontaktflächen 7 und 8 sind jeweils über Leiterbahnen in geeigneter Weise mit den erforderlichen Anschlüssen verbunden. Bei der fertig montierten Sensoranordnung dienen die Öffnungen dazu, die Sensoren mit der zu analysierenden Probe zu beaufschlagen.

Fig. 2b zeigt eine Aufsicht auf ein Dichtelement für eine Sensoranordnung gemäß der vorliegenden Erfindung, wobei das Dichtelement bei dieser Ausführungsform eine Silikonschicht umfasst, in welche durchgehende Goldfäden eingebracht sind, die sich im wesentlichen senkrecht zur Ebene des Dichtelements 5 erstrecken. Auf diese Weise ist das Dichtelement in der Ebene des Dichtelements elektrisch isolierend und senkrecht zur Ebene des Dichtelements leitend. Somit können miteinander fluchtende elektrische Kontaktflächen, welche durch die Dichtung voneinander getrennt sind, miteinander in elektrischen Kontakt gebracht werden, während bezüglich der Ebene des Dichtungselements lateral versetzte Kontaktflächen voneinander elektrisch isoliert sind.

Die erforderliche Mindestgröße von fluchtenden Kontaktflächen zur Gewährleistung eines sicheren Kontakts ist eine Frage der mittleren Anzahl von Goldfäden pro Flächeneinheit des Dichtelements. Dieser Parameter kann vom Fachmann in geeigneter Weise angepasst werden. Gleichermaßen ist der mittlere laterale Abstand von Bauelementen zur Gewährleistung einer zuverlässigen Isolation eine Funktion der Anzahldichte der Goldfäden sowie von deren Orientierung und deren Durchmesser. Derzeit wird ein Dichtungselement bevorzugt, welches eine zuverlässige Kontaktierung bei fluchtenden Kontaktflächen von bereits weniger als 1 mm² ermöglicht und eine ausreichende Isolation bei einem lateralen Abstand von etwa 0,5 mm gewährleistet.

Die äußeren Abmessungen des Dichtelements in Fig. 2b sind bei dieser Ausführungsform kongruent mit den äußeren Abmessungen der Unterseite des Substrats in Fig. 2a, wobei dies nicht zwingend erforderlich ist. Das Dichtelement weist zudem für jede Probenkammer im Substrat und ggf. zusätzlich für eine Referenzkammer Öffnungen auf, welche mit den entsprechenden Öffnungen im Substrat fluchten. Es ist zweckmäßig, wenn die Öffnungen im Dichtelement etwa die gleiche Größe wie die Öffnungen in der Unterseite des Substrats 6 aufweisen. Auf diese Weise werden Totvolumina zwischen dem Substrat und einem als Bodenelement dienenden Halbleiterchip bzw. zwischen dem Dichtelement und dem Bodenelement oder dem Substrat vermieden.

Fig. 2c zeigt schließlich ein Längsschnitt durch eine zusammengesetzte Sensoranordnung gemäß der vorliegenden Erfindung, wobei das Dichtelement 5 zwischen dem Halbleiterchip 1 und dem Substrat 6 eingespannt ist.

Der Halbleiterchip 1 weist in seiner dem Substrat 6 zugewandten Oberfläche ionensensitive Bereiche 2 auf, welcher mit den Öffnungen im Substrat 6 fluchten. Beabstandet zu den Öffnungen sind jeweils Kontaktflächen 3 und 4 angeordnet, welche jeweils mit den komplementären Kontaktflächen 7, 8 auf der Unterseite des Substrats fluchten. Die Kontaktierung zwischen den chipseitigen Kontaktflächen 3, 4 und den substratseitigen Kontaktflächen 7, 8 wird durch die Leitfähigkeit des Dichtelements 5 senkrecht zu dessen Ebene gewährleistet.

Um eine hinreichende Dichtungswirkung zu erzielen, muss der Halbleiterchip 1 mit ausreichender Kraft gegen die Unterseite des Substrats 6 gedrückt werden. Dies kann einerseits durch eine Einspannung mit formstabilen Bauelementen erfolgen und andererseits durch eine Vorspannung mittels elastischer Elemente wie einer Schraubfeder, die hier jedoch nicht dargestellt ist.

Das Substrat 6 kann einstückig mit einem Gehäuse eines Halbleitersensors ausgebildet sein oder als separates Bauteil, welches in geeigneter Weise in ein Gehäuse einzusetzen ist. Diese und ähnliche Ausgestaltungen ergeben sich für den Fachmann in nahe liegender Weise, ohne vom Gegenstand der Erfindung abzuweichen, die in den nachfolgenden Patentansprüchen definiert ist.

## Patentansprüche

1. Sensoranordnung, umfassend:
mindestens zwei Probenkammern;
mindestens zwei potentiometrische FET-Sensoren (10), insbesondere IsFET-Sensoren oder ChemFET-sensoren, mit jeweils einem sensitiven Oberflächenabschnitt (2), wobei der sensitive Oberflächenabschnitt (2) jeweils mit einer der Probenkammern (9) in Fließverbindung steht; und
eine Referenzzelle mit einem Referenzmedium zur Bereitstellung eines Referenzpotentials, wobei die Probenkammern mit dem Referenzmedium über eine Elektrolytbrücke (11) verbunden sind.

2. Sensoranordnung nach Anspruch 1, wobei die Sensoranordnung ein erstes Modul (6) umfaßt, welches die Probenkammern aufweist.

3. Sensoranordnung nach Anspruch 2, wobei die Sensoranordnung mindestens ein zweites Modul (1) umfaßt, welches mehrere potentiometrischen FET-Sensoren aufweist.

4. Sensoranordnung nach Anspruch 2, wobei die Sensoranordnung mindestens mehrere zweite Module (1) umfaßt, welche jeweils einen potentiometrischen FET-Sensor aufweisen.

5. Sensoranordnung nach einem der Ansprüche 2 - 4, wobei das erste Modul (6) (einen plattenförmigen Grundkörper mit Bohrungen aufweist, welche als Probenkammer (9) dienen.

6. Sensoranordnung nach Anspruch 5 und Anspruch 3 oder 4, wobei die Bohrungen durchgehend sind, und wobei das mindestens eine zweite Modul bzw. die zweiten Module (1) als Bodenelement gestaltet sind, welche die durchgehenden Bohrungen von der Unterseite des ersten Moduls (6) verschließen.

7. Sensoranordnung nach Anspruch 5 und Anspruch 3 oder 4, wobei die potentiometrischen FET-Sensoren derart in das zweites Modul (1) integriert sind, daß jeweils ein FET-Sensor mit einer der durchgehenden Bohrungen fluchtet.

8. Sensoranordnung nach Anspruch 5 oder einem davon abhängigen Anspruch, wobei die Elektrolytbrücke (11) über Elektrolytkanäle verläuft, welche in dem Grundkörper ausgebildet sind.

9. Sensoranordnung nach Anspruch 8, wobei der Grundkörper mehrere Elemente, insbesondere mehrere Schichten aufweist, und die Elektrolytkanäle in einer Grenzfläche zwischen zwei benachbarten Elementen angeordnet sind.

10. Sensoranordnung nach einem der Ansprüche 3 oder 4, wobei die Elektrolytbrücke (11) über Elektrolytkanäle verläuft, welche in dem zweiten Modul (1), integriert sind.

11. Sensoranordnung nach einem der Ansprüche 1 bis 10, wobei die Referenzzelle einen potentiometrischen Referenz-FET-Sensor (12) zur Bereitstellung eines Referenzpotentials aufweist, welches gegen das Pseudoreferenzpotential einer Potentialableitelektrode (13) erfaßt wird.

12. Sensoranordnung nach Anspruch 11, wobei die Potentialableitelektrode (13) mit dem Referenzmedium in der Referenzzelle beaufschlagt ist.

13. Sensoranordnung nach Anspruch 12, wobei die Potentiale U_{diff1}, U_{diff2,} ... U_{diffN} von N FET-Sensoren in den Probenkammern gegen das Pseudoreferenzpotential ermittelt, und die messgrößenrelevanten Potentialdifferenzen, jeweils durch Differenzbildung zwischen dem jeweiligen Potential und dem Referenzpotential U_{ph1...N} = U_{diff1...N} - U_{diffref} bestimmt werden.

## Claims

1. Sensor arrangement, comprising:
at least two sample chambers;
at least two potentiometric FET sensors (10), particularly IsFET or ChemFET sensors, each with a sensitive surface section (2) where the sensitive surface section (2) is in flow connection with one of the sample chambers (9);
a reference cell with a reference medium for making a reference potential available, where the sample chambers are connected to the reference medium via an electrolyte bridge (11).

2. Sensor arrangement as per Claim 1, where the sensor arrangement comprises a first module (6) exhibiting the sample chambers.

3. Sensor arrangement as per Claim 2, where the sensor arrangement comprises at least a second module (1) that exhibits several potentiometric FET sensors.

4. Sensor arrangement as per Claim 2, where the sensor arrangement comprises at least several second modules (1), each of which exhibits a potentiometric FET sensor.

5. Sensor arrangement as per one of the Claims 2-4, where the first module (6) exhibits a plate-like meter body with bore holes that serve as sample chambers (9).

6. Sensor arrangement as per Claim 5 and Claim 3 or 4, where the bore holes are continuous and where the one second module at least, or the second modules (1) are designed as a floor element that seal the continuous bores from the underside of the first module (6).

7. Sensor arrangement as per Claim 5 and Claim 3 or 4, where the potentiometric FET sensors are integrated into the second module (1) in such a way that a FET sensor is aligned with one of the continuous bore holes.

8. Sensor arrangement as per Claim 5, or an interdependent Claim, where the electrolyte bridge (11) runs over electrolyte channels that are formed in the meter body.

9. Sensor arrangement as per Claim 8, where the meter body exhibits several elements, particularly several layers, and the electrolyte channels are arranged in a boundary area between two adjacent elements.

10. Sensor arrangement as per one of the Claims 3 or 4, where the electrolyte bridge (11) runs over electrolyte channels that are integrated in the second module (1).

11. Sensor arrangement as per Claims 1 to 10, where the reference cell exhibits a potentiometric reference FET sensor (12) to make a reference potential available. This reference potential is recorded against the pseudo reference potential of a potential conducting electrode (13).

12. Sensor arrangement as per Claim 11 where the potential conducting electrode (13) is exposed to the reference medium in the reference cell.

13. Sensor arrangement as per Claim 12, where the system determines the potentials U_{diff1}, U_{diff2} to U_{diffN} of N FET sensors in the sample chambers against the pseudo reference potential, and the potential differences relevant to the measured variable are determined by calculating the difference between the potential and the reference potential U_{ph1..N} = U_{diff1...N} - U_{diffref}.

## Revendications

1. Circuit de capteurs, comprenant :
au minimum deux chambres d'échantillons
au minimum deux capteurs FET potentiométriques (10), notamment des capteurs IsFET ou des capteurs ChemFET, chacun pourvu d'une partie superficielle sensible (2), chacune de ces parties superficielles sensibles (2) étant en relation avec l'une des chambres d'échantillons (9), et
une cellule de référence comprenant un produit de référence destiné à la mise à disposition d'un potentiel de référence, les chambres d'échantillons étant reliées avec le produit de référence par l'intermédiaire d'un pont d'électrolyte (11).

2. Circuit de capteurs selon la revendication 1, le circuit de capteurs comprenant un premier module (6), lequel comporte les chambres d'échantillons.

3. Circuit de capteurs selon la revendication 2, le circuit de capteurs comprenant au minimum un second module (1), lequel comporte plusieurs capteurs FET potentiométriques.

4. Circuit de capteurs selon la revendication 2, le circuit de capteurs comprenant au minimum plusieurs seconds modules (1), lesquels comportent chacun un capteur FET potentiométrique.

5. Circuit de capteurs selon la revendication 1 ou 2, pour lequel le premier module (6) comprend un corps de base en forme de plaque muni d'alésages, qui servent de chambre d'échantillons (9).

6. Circuit de capteurs selon la revendication 5 et selon la revendication 3 ou 4, pour lequel les alésages sont traversants et pour lequel au minimum un second, voire les seconds modules (1), sont conçus en tant qu'éléments de fond, lesquels obturent les alésages traversants par le dessous du premier module (6).

7. Circuit de capteurs selon la revendication 5 et selon la revendication 3 ou 4, pour lequel les capteurs FET potentiométriques sont intégrés dans le second module (1) de telle manière que chacun des capteurs FET affleure l'un des alésages traversants.

8. Circuit de capteurs selon la revendication 5 ou selon l'une des revendications en dépendant, pour lequel le pont d'électrolyte (11) s'étend par le biais de canaux d'électrolyte, lesquels sont formés dans le corps de base.

9. Circuit de capteurs selon la revendication 8, pour lequel le corps de base présente plusieurs éléments, notamment plusieurs couches, et pour lequel les canaux d'électrolyte sont disposés dans une surface de séparation entre deux éléments voisins.

10. Circuit de capteurs selon la revendication 3 ou 4, pour lequel le pont d'électrolyte (11) s'étend par le biais de canaux d'électrolyte, lesquels sont intégrés dans le second module (1).

11. Circuit de capteurs selon la revendication 1 à 10, pour lequel la cellule de référence comporte un capteur FET de référence potentiométrique (12) en vue de la mise à disposition d'un potentiel de référence, lequel est mesuré par rapport au potentiel de référence fictif d'une électrode de dérivation de potentiel (13).

12. Circuit de capteurs selon la revendication 11, pour lequel l'électrode de dérivation de potentiel (13) est soumise à un produit de référence à l'intérieur de la cellule de référence.

13. Circuit de capteurs selon la revendication 12, pour lequel les potentiels U_{diff1}, U_{diff2}, ... U_{diffN} sont déterminés par N capteurs FET, situés dans les chambres d'échantillons, par rapport au potentiel de référence fictif, et les différences de potentiel importantes pour les grandeurs de mesure sont déterminées respectivement par le calcul de la différence entre le potentiel respectif et le potentiel de référence U_{ph1...N} = U_{diff1...N} - U_{diffref}.
